# EUROPEAN PATENT APPLICATION

(11) **EP 2 523 328 A2**
(43) Date of publication of application: **14.11.2012**
(21) Application number: 12167407.1
(22) Date of filing: 10.05.2012
(51) Int. Cl.: H02M 3/00

(54) **Electronic device**

(30) Priority: 11.05.2011 JP 2011105995
(71) Applicant: Funai Electric Co., Ltd., Daito-shi, Osaka (JP)
(72) Inventor: Sasaki, Toru, Daito-shi, Osaka (JP)
(74) Representative: Grünecker, Kinkeldey, Stockmair & Schwanhäusser

(57) **Abstract**

The present invention discloses an electronic device having an electronic circuit that has a transformer, a switching element that generates a predetermined voltage at the transformer by a switching operation, an IC that outputs a drive signal to switch the switching element, and a feedback coil that feeds back a voltage generated at a secondary coil of the transformer. The IC monitors a voltage value of the feedback coil using a first terminal and outputs the drive signal to drive the switching element according to the voltage value of the feedback coil, the IC is latched when a voltage value applied at a second terminal is equal to or lower than a threshold value, and the IC has a voltage decreasing portion that decrease the voltage applied at the second terminal when the voltage supplied by the feedback coil is lower than the predetermined value.

## Description

### BACKGROUND OF THE INVENTION

### 1. Field of the Invention:

The present invention relates to an electronic device having a power circuit to generate a power by driving a switching element.

### 2. Description of the Related Art:

Conventionally, an electronic device includes a power circuit.
In the electronic device, power is generated at the power circuit and supplied to a circuit connected to a secondary coil of a transformer. In addition, the electronic device includes a switching element and an IC (Integrated Circuit) for driving the switching element. The power circuit generates a predetermined power under the control of the IC. For example, such a power circuit is disclosed in the following documents:
Japanese Patent Application Publication 2006-352975
Japanese Patent Application Publication 2004-120926
Japanese Patent Application Publication 2003-259636
Japanese Patent Application Publication H09-121537
Japanese Patent Application Publication 2006-254590

Above described IC for the power circuit can have a function to detect a voltage value generated at a feedback coil and adjust a timing to output a drive signal according to the detected voltage value. For example, the 1C detects a timing when a signal generated at the feedback coil becomes 0V and outputs the drive signal to the switching element in order to synchronize with the detected timing.

In the power circuit that includes the above described IC, if the feedback coil is broken in some reason, the IC may output the signal having an abnormal waveform.

### BRIEF SUMMARY OF THE INVENTION

The present invention provides a power circuit to stop the circuit safely even when the feedback coil is broken.

One aspect of the present invention provides an electronic device having an electronic circuit, comprising:
a transformer;
a switching element that generates a predetermined voltage at the transformer by a switching operation;
an IC that outputs a drive signal to drive the switching element, and a feedback coil that feeds back a voltage generated at a secondary coil of the transformer, wherein
the IC monitors a voltage value of the feedback coil using a first terminal and outputs the drive signal to drive the switching element according to the voltage value of the feedback coil,
the IC is latched when a voltage value applied at a second terminal is equal to or lower than a threshold value, and
the IC has a voltage decreasing portion that decreases the voltage applied at the second terminal when the voltage supplied by the feedback coil is equal to or lower than a predetermined value.

In the above structured invention, the IC is a part of the electric circuit and the IC has the voltage decreasing portion that decreases the voltage applied at the second terminal when the voltage supplied by the feedback coil is equal to or lower than the predetermined value. Therefore, the voltage decreasing portion reduces the voltage applied at the second terminal of the IC when the feedback coil is damaged and the voltage supplied by the feedback coil is equal to or lower than the predetermined value. Consequently, the voltage value applied at the second terminal of the IC becomes equal to or lower than the threshold value and then the IC is latched.

Therefore, in the present invention, the circuit can be stopped safely even when the feedback coil is broken.

### BRIEF DESCRIPTION OF THE DRAWINGS

Fig. 1 is a block diagram showing a structure of an electronic device.
Fig. 2 shows a partial structure of a power circuit 80.
Fig. 3 shows a structure of an IC 1.

### DETAILED DESCRIPTION OF THE INVENTION

Hereinafter, embodiments of the present invention will be explained in the following order.
1. The first embodiment:
2. Other embodiments:

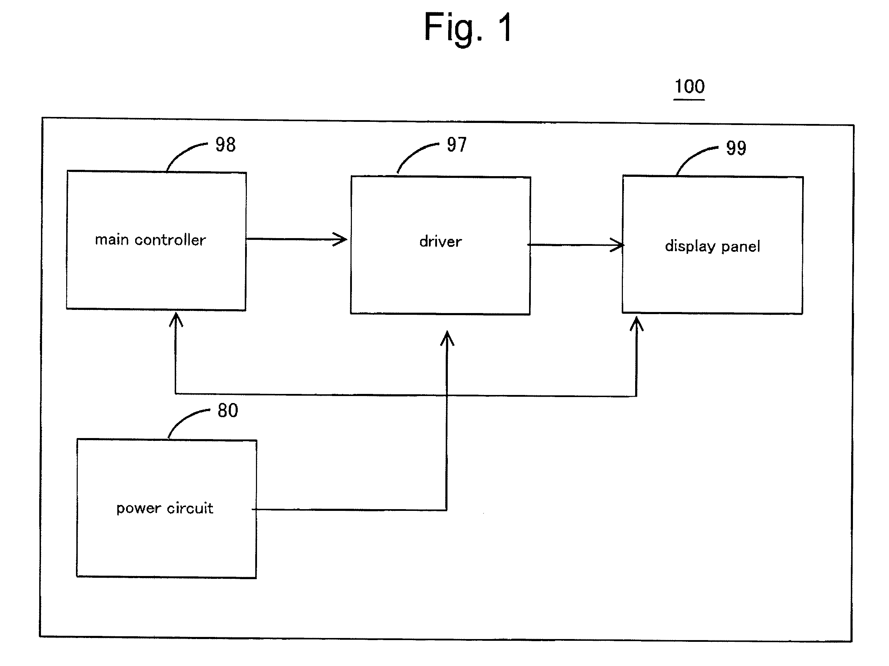

1. The first embodiment:
The present invention concerning an electronic device will be explained below with reference to figures. Fig. 1 is a block diagram showing a structure of an electronic device. Note that a display device 100 is used as an example of the electronic device in the following explanation.

As shown in Fig. 1, the display device 100 includes a liquid crystal display panel 99, a main controller 98, a driver 97, and a power circuit 80. In the display device 100, images are displayed on the display panel 99 based on image data input from an external device (not illustrated) or broadcasting signal received through a tuner (not illustrated).

The display panel 99 includes a screen on which picture elements are aligned according to a resolution of the display panel 99, and liquid crystal is filled in each picture element. The screen is composed of picture elements and electrodes are provided to each sides of the picture element. By supplying a drive voltage to the electrode, the picture element is driven and light transmittance of the picture element can be changed. The display panel 99 also includes many switches to select scanning lines to drive the picture elements. The drive voltage is supplied to the electrodes on the scanning lines selected by the switches.

The main controller 98 includes a CPU (Central Processing Unit) to carry out an operation, a ROM (Read Only Memory) in which programs to enable the CPU to carry out the operation are recorded, and a RAM (Random Access Memory) that is used by the CPU as a working area. If image data or other data is received through a tuner (not illustrated) or the like, the main controller 98 carries out a predetermined signal processing and then outputs the received data to the driver 97.

The driver 97 performs digital-to-analog conversion to the image data, and generates a drive voltage according to a gradation value indicated by the image data. In addition, the driver 97 supplies the drive voltage to the electrodes on the scanning lines of the display panel based on a vertical synchronizing signal and a horizontal synchronizing signal included in the image data. Therefore, the electrodes drive the picture elements corresponding to the electrodes by adding the drive voltage to the picture elements.

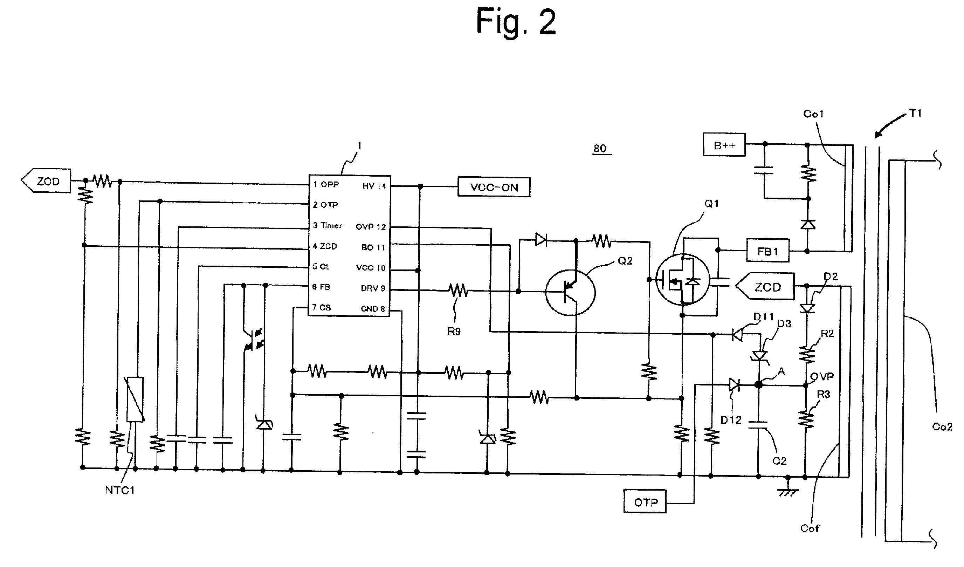

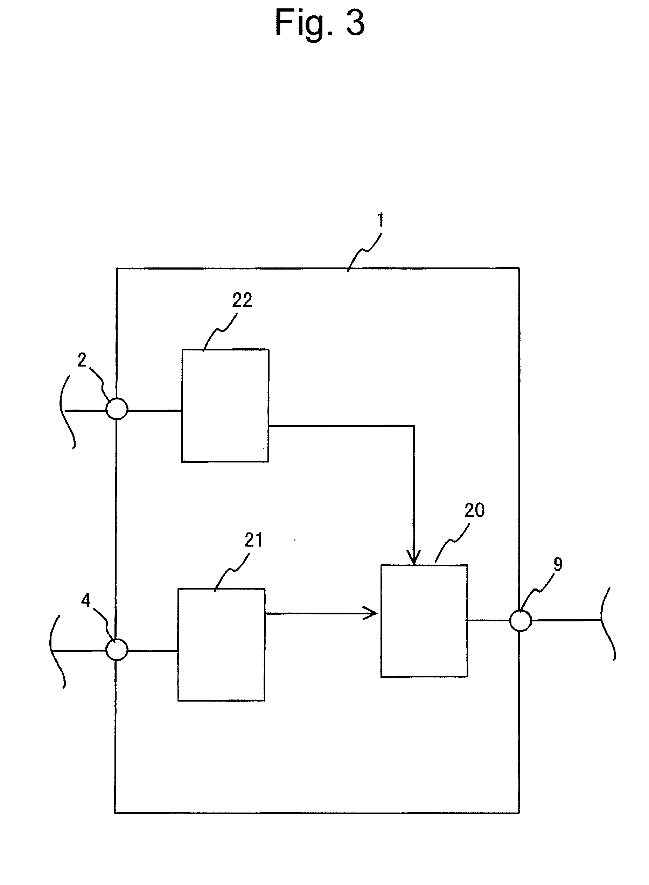

Fig. 2 shows a partial structure of a power circuit 80. Fig. 3 shows a structure of an IC 1.
The power circuit 80 generates a power based on the power supplied from a commercial power supply (AC 100V, not illustrated) to drive a secondary circuit of the display device 100. The secondary circuit is the display panel 99, the main controller 98, and the driver 97 in the present embodiment. In the present embodiment, the power circuit 80 generates a predetermined voltage by switching a FET Q1 (switching element) and then supplies the predetermined voltage to the secondary circuit. Therefore, roughly speaking, the power circuit 80 includes an IC 1, the FET Q1, a transformer T1, and a feedback coil Cof.

More specifically, a HV terminal 14 of the IC 1 receives a DC voltage (VCC-ON) to drive the IC 1. Here, the VCC-ON is a voltage generated at a primary side (not illustrated) of the power circuit 80. A DRV terminal 9 of the IC 1 is connected to a gate of the FET Q1 through a drive circuit that is configured by a register R9 and a transistor Q2. A junction between a drain and a source of the FET Q1 is connected to one end of a primary coil Col of the transformer T1. Another end of the primary coil Co1 is supplied voltage through a rectifier circuit and a smoothing circuit that are not illustrated. The feedback coil Cof is aligned to face a secondary coil Co2 of the transformer T1 placing an iron core in the center, and is connected to a ZCD terminal 4 of the IC 1 through a diode D2 and registers R2, R3.

In the above described power circuit 80, if a VCC-ON signal that indicates an operation to turn on a main power is input to the HV terminal 14 of the IC 1, a pulse signal is output from an internal block 20 of the IC 1 thorough the DRV terminal 9. The pulse signal is output as a pulse drive signal to the FET Q1 through the drive circuit. Then, the FET Q1 is turned on, and the voltage is supplied to the primary coil Co of the transformer T1 through the rectifier circuit and the smoothing circuit. Consequently, the predetermined voltage is generated at the secondary coil Co2 of the transformer T1.

After a certain period of time has passed, a feedback voltage Vf that has a sinusoidal wave is generated at the feedback coil Cof. The IC 1 monitors a change in a waveform of the feedback voltage Vf using the ZCD terminal 4 (first terminal). In other words, the IC 1 includes an internal block 21 that detects a timing when the feedback voltage Vf becomes 0V, and the IC 1 outputs the drive signal from the DRV terminal 9 at the timing when the feedback voltage Vf becomes 0V Therefore, the FET Q1 continues switching operation in the power circuit 80, and the predetermined voltage is supplied to the secondary circuit from the secondary coil Co2.

The IC 1 is prevented from overheating by monitoring the voltage applied at an OTP (Over Temperature Protection) terminal 2 (second terminal). In other words, the OTP terminal 2 of the IC 1 is grounded through a thermister NTC1. In addition, the IC 1 includes an internal block 22 that applies current to the thermister NTC1 from the OTP terminal 2 and compares the voltage specified by the thermister NTC1 with a threshold value S in order to latch the IC 1 according to the comparison result. The threshold value S is specified to 1.0V in the internal block 22 of the IC 1 in the present embodiment. In an ordinary condition, voltage of 3.0V is applied at the OTP terminal 2. Therefore, if ohmic value of the thermister NTC1 is changed and the voltage applied at the OTP terminal 2 drops from 3.0V to 1.0V or lower, the internal block 22 latches the IC1 to stop outputting the drive signal. Consequently, the IC 1 stops driving the power circuit 80.

Furthermore, the IC 1 monitors overvoltage of the secondary coil Co2 using an OVP (Over Voltage Protection) terminal 12 based on the feedback voltage Vf generated at the feedback coil Cof. Here, one end of the feedback coil Cof is connected to the diode D2 and registers R2, R3 in series. Therefore, the feedback voltage Vf is generated at a contact point (OVP point) between the register R2 and the register R3 after rectified by the diode D2 and divided by the registers R2, R3. In addition, an anode of a Zener diode D3 that detects the overvoltage is connected to the OVP terminal 12 thorough a diode D11. Consequently, the IC 1 monitors a voltage value at the OVP point from the OVP terminal 12 using the Zener diode D3.

If the feedback coil Cof is damaged and short-circuited for some reason in the above described power circuit 80, the feedback voltage Vf may not be fed back correctly. In such a case, the voltage generated at the transformer T1 may be unexpected value because the drive signal output from the IC 1 is kept at a high level or a duty ratio of the drive signal is changed to unexpected value. The present invention provides a solution to stop driving the power circuit 80 safely in case the feedback coil Cof is broken.

The OTP terminal 2 of the IC 1 is connected to the feedback coil Cof through a diode D12 (voltage reducing portion). Specifically, the OTP terminal 2 is connected to an anode of the diode D12. In addition, a cathode of the diode D12 is connected to a point A to connect to the OVP point that detects a voltage value of the feedback coil Cof. Furthermore, the point A is connected to the ground thorough a condenser C2.

If the feedback coil Cof is normal, although the feedback voltage Vf changes within a range of 0V to 5V, a potential difference between both sides of the diode D12 does not appear continuously and a current does not flow through the diode D12. Therefore, the voltage supplied to the OTP terminal 2 varies only depending on the ohmic value of the thermister NTC1. If the feedback coil Cof is damaged and short-circuited, an electric potential at the point A is kept around 0V, the potential difference between both sides of the diode D12 appears continuously, and a current flows through the diode D12. Therefore, the voltage applied at the OTP terminal 2 drops down rapidly and the internal block 22 works to latch the IC 1 when the voltage is equal to or below the threshold value S (e.g. 1.0V). Consequently, the drive signal is not output from the DRV terminal 9 of the IC 1 and the FET Q1 stops switching operation to stop driving the power circuit 80.

As explained above, even if the feedback coil Cof is damaged, the power circuit 80 in the present embodiment can be safely stopped by latching IC 1 to stop supplying the drive signal.

2. Other embodiments:
Various embodiments can be applied to the present invention. The display device explained above is an example of the electric device. The electric circuit explained in the above embodiment can be applied to any electric devices.
The diode D12 is an example of the voltage reducing portion. The voltage reducing portion can be any electric circuits that reduce the voltage supplied to the OTP terminal according to the voltage change of the feedback coil Cof.

Note that, this invention is not limited to the above-mentioned embodiments. Although it is to those skilled in the art, the following are disclosed as the one embodiment of this invention.
- Mutually substitutable members, configurations, etc. disclosed in the embodiment can be used with their combination altered appropriately.
- Although not disclosed in the embodiment, members, configurations, etc. that belong to the known technology and can be substituted with the members, the configurations, etc. disclosed in the embodiment can be appropriately substituted or are used by altering their combination.
- Although not disclosed in the embodiment, members, configurations, etc. that those skilled in the art can consider as substitutions of the members, the configurations, etc. disclosed in the embodiment are substituted with the above mentioned appropriately or are used by altering its combination.

## Claims

1. An electronic device having an electronic circuit, comprising:
a transformer;
a switching element that generates a predetermined voltage at the transformer by a switching operation;
an IC that outputs a drive signal to drive the switching element, and
a feedback coil that feeds back a voltage generated at a secondary coil of the transformer, wherein
the IC monitors a voltage value of the feedback coil using a first terminal and outputs the drive signal to drive the switching element according to the voltage value of the feedback coil,
the IC is latched when a voltage value applied at a second terminal is equal to or lower than a threshold value, and
the IC has a voltage decreasing portion that decreases the voltage applied at the second terminal when the voltage supplied by the feedback coil is equal to or lower than the predetermined value.

2. The electronic device according to claim 1, wherein:
the voltage decreasing portion is a diode in which a cathode is connected to the feedback coil and an anode is connected to the second terminal.

3. The electronic device according to claims 1 or 2, wherein:
the IC specifies a timing to output the drive signal according to a change of the voltage value supplied by the feedback coil.

4. The electronic device any one of claims 1 to 3, wherein:
the second terminal is connected to a thermister.
